# EUROPEAN PATENT SPECIFICATION

(11) **EP 1 842 714 B1**
(45) Date of publication and mention of the grant of the patent: **15.06.2011**
(21) Application number: 06425236.4
(22) Date of filing: 05.04.2006
(51) Int. Cl.: B60K 37/00, B62D 25/14

(54) **Vehicle dashboard**
Armaturenbrett eines Fahrzeugs
Tableau de bord d'automobile

(43) Date of publication of application: 10.10.2007
(73) Proprietor: DENSO THERMAL SYSTEMS S.p.A., 10046 Poirino (Torino) (IT)
(72) Inventor: Scavino, Gianni c/o Denso Thermal Systems Spa, 10046 Poirino (Torino) (IT)
(74) Representative: Quinterno, Giuseppe

(56) References cited:
- DE-A1- 19 534 568
- DE-A1- 19 626 441
- US-A- 5 580 122
- US-A- 5 678 877
- US-A1- 2002 145 309
- US-A1- 2003 122 403
- US-A1- 2003 193 207
- US-B1- 6 305 733
- US-B1- 6 669 273

## Description

The present invention relates to a vehicle dashboard according to the preamble of claim 1.

The dashboard of a vehicle is a complex entity that comprises numerous components. The dashboard is often constructed in the form of a pre-assembled unit, in which the various components and devices are assembled together outside the vehicle assembly line, to originate an autonomous constructive unit complete with all components, which is mounted on the vehicle as an autonomous sub-assembly. Typically, the dashboard of a vehicle comprises an air conditioning and/or heating assembly with the related controls, a housing for the radio or other electrical components (on-board computer, satellite navigator, etc.), an indicator instrument panel, one or more air bags, etc. The dashboard of a vehicle further comprises a complex wiring system which includes all cables necessary for the operation of the electrical devices installed on the dashboard.

In prior art solutions, the wiring system is housed in sheathes or ducts and it is anchored to the support structure of the dashboard by brackets, straps or other fastening elements.

The anchoring of the wiring system to the support structure of the dashboard is usually a long and expensive operation.

DE-A-19626441 discloses a vehicle dashboard according to the preamble of claim 1, which is supported by rigid air ducts and has at least some of the components attached before assembly into the vehicle. Components include the air conditioning unit, airbags, instruments and control. Different parts of the moulded construction have materials of different hardness to match the required support and to provide impact protection for the occupants. Fibre reinforced plastics mouldings are used, strengthened by ribbing where necessary.

US-A-2002145309 discloses an air-conditioning duct structure included in a vehicular dashboard. Material for the duct is made of a heat insulating and sound absorbing material and is adhered onto the surface of a sheet material for the beam member which is then bent into a semi-tubular shape so that the material for the duct is positioned inside thereby forming beam member bodies.

DE-A-19534568 discloses a mounting device having a rigid carrier attached to the vehicle structure in an approximately horizontal position and able to act as a support for the dashboard. The carrier has walls defining a hollow chamber which accepts electrical cables which can be connected to devices or control panels.

The object of the present invention is to provide a support assembly for a vehicle dashboard that enables to simplify the installation of the wiring system and to reduce the cost and the number of components necessary to install the wiring system.

According to the present invention, said object is achieved by a support assembly having the characteristics set out in claim 1.

The present invention shall now be described in detail with reference to the accompanying drawings, provided purely by way of non limiting example, in which:

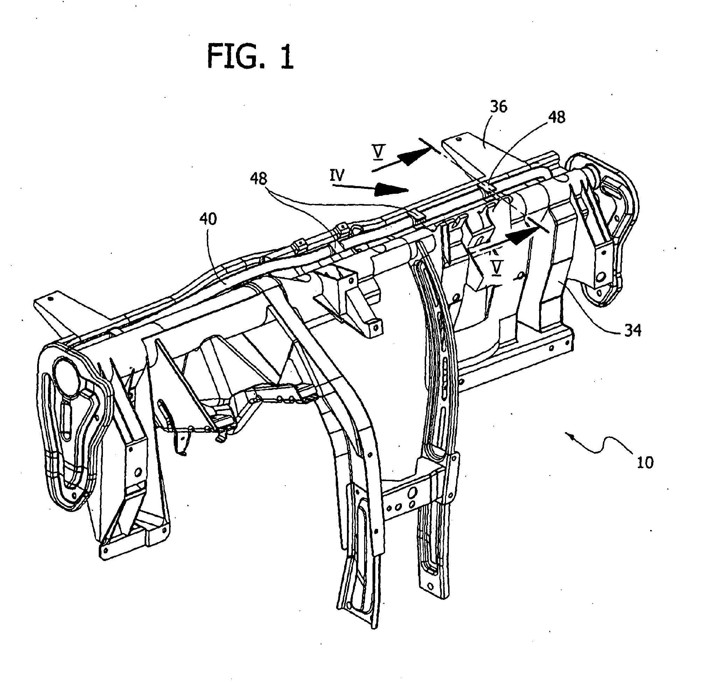

- Figure 1 is a perspective view of a support assembly of a vehicle dashboard according to the present invention,
- Figure 2 is a perspective view showing the support assembly of Figure 1 with the wiring system in exploded position,
- Figure 3 is an exploded perspective view separately illustrating the metal structure and the plastic material structure of the support assembly of Figure 1,
- Figure 4 is an enlarged scale detail of the part indicated by the arrow IV in Figure 1,
- Figure 5 is a schematic section according to the line V-V of Figure 1, and
- Figure 6 shows the section of Figure 5 with a cable having different dimensions.
With reference to Figures 1, 2 and 3, the number 10 designates a support assembly for a vehicle dashboard. As shown in Figure 3, the support assembly 10 comprises a metallic support structure 12 and a structure made of plastic material 14, co-moulded on the metallic structure 12.

The metallic structure 12 comprises a tubular beam 16 which extends substantially over the entire length of the dashboard. The beam 16 is provided at its ends with fastening elements 18 made of stamped sheet metal or the like, fastened to the ends of the beam 16, e.g. by welding. The fastening elements 18 are so shaped as to allow to fasten the support assembly 10 to the body of a vehicle. The metallic structure 12 can also be provided with various structural elements with support, fastening functions, etc. For example, in the embodiment illustrated in the figures, the metallic structure 12 comprises a central support 20 including two stamped sheet metal elements 22 fastened at their upper ends to the cross member 16 and intended to be fastened at their lower ends to the body of the vehicle. The central support 20 defines a seat 24 for housing and fastening the air conditioning and/or heating assembly of the vehicle. The metallic structure 12 further comprises a support 26 for the vehicle steering assembly. The support 26 too is constituted by stamped sheet metal elements fastened to the beam 16 or to a tubular reinforcement 28 which in turn is fastened to the beam 16.

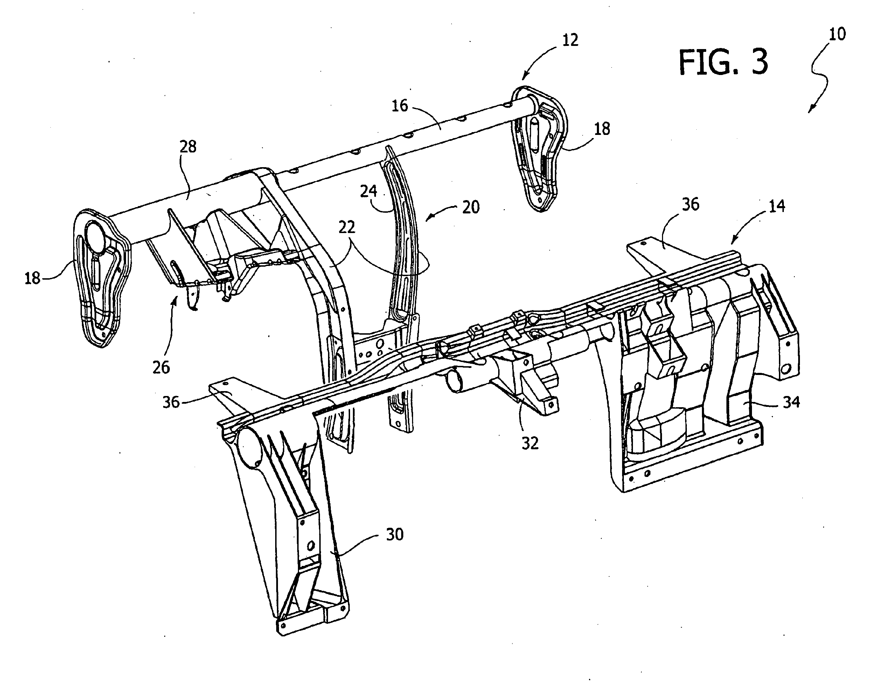

With reference again to Figure 3, the structure made of plastic material 14 is constituted by a plastic coating co-moulded on the metallic structure 12. For the sake of clarity, Figure 3 shows the structure of plastic material 14 separate from the metallic structure 12. In actuality, the structure of plastic material 14 is formed directly on the metallic structure 12, which constitutes a support for the structure of plastic material 14. Therefore, the structure of plastic material 14 does not exist as a separate component from the metallic structure 12.

The structure of plastic material 14 is provided with integral fastening portions 30, 32, 34, 36 that form elements for attaching dashboard components and/or devices. The fastening portions 30, 32, 34, 36 serve for example for fastening the shell constituting the outer aesthetic coating of the dashboard to the support assembly 10. Said fastening portions also serve the purpose of fastening the instrument panel, the air conditioning and/or heating assembly, the glove compartment, the airbag assembly and, in general, all devices and components comprised in the vehicle dashboard.

Forming the fastening element 30, 32, 34, 36 by co-moulding on the metallic structure 12 enables to obtain a high precision of the positioning of the fastening elements on the metallic structure 12. Moreover, a rationalisation and a reduction in mounting costs and times are obtained because the need to provide brackets or other fastening elements to be mounted or fastened individually on the metallic support structure 12 is avoided.

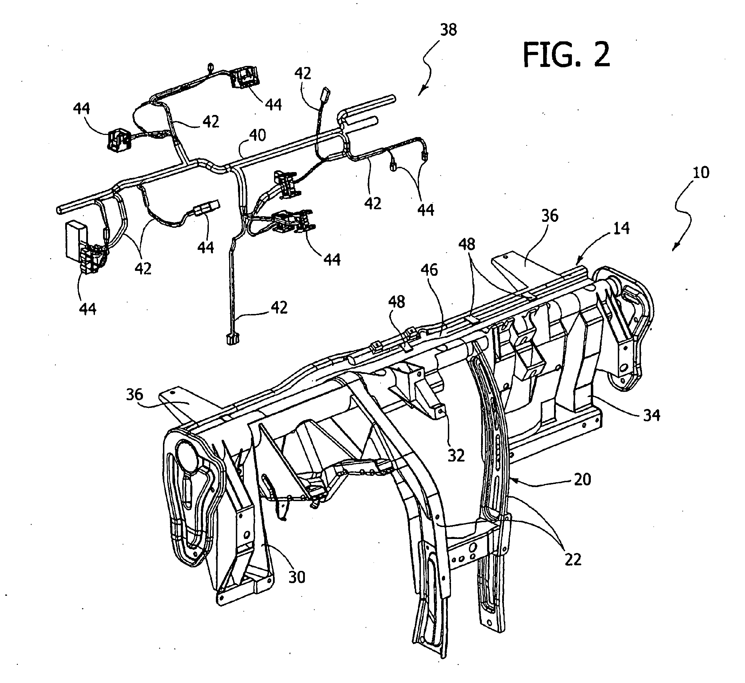

With reference to Figure 2, the number 38 designates a wiring system formed by a set of electrical cables that constitutes the connections to the different electrical devices and components of the dashboard. In the illustrated example, the wiring system 38 has a main trunk 40 which generally extends in transverse direction and wherefrom depart a plurality of branches 42 terminating with respective electrical connectors 44. The connectors 44 are coupled with complementary connectors with which the electrical devices or components of the dashboard are provided.

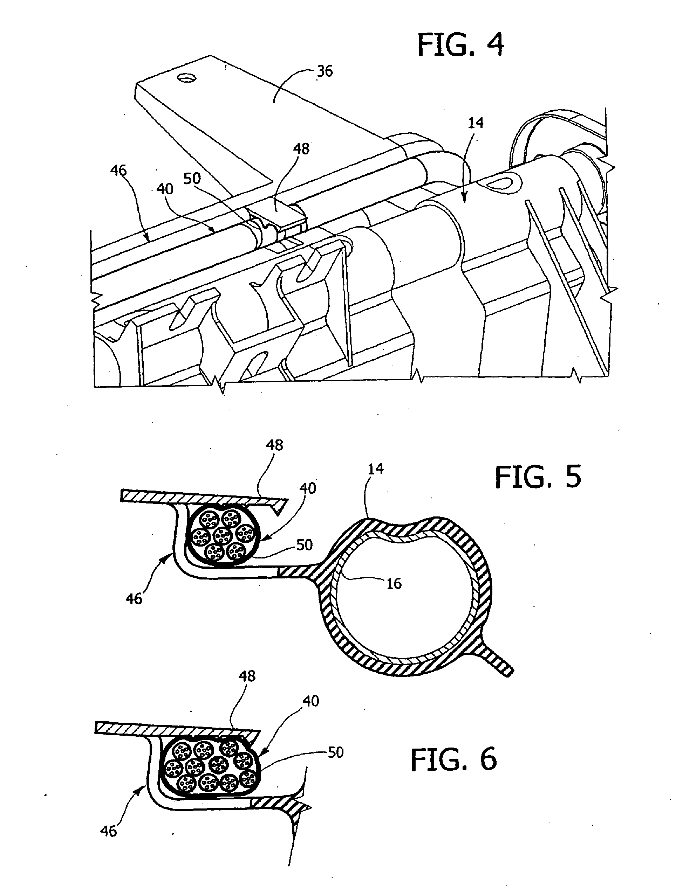

With reference to Figures 4 and 5, the structure of plastic material 14 comprises housing portions 46 integrally obtained with the remaining part of the structure of plastic material 14 during the co-moulding of the structure 14 on the metallic support structure 12. The housing portions 46 are so shaped as to receive the bundle of wires constituting the central trunk 40 of the wiring system 38 and one or more of the bundles of wires constituting the branches 42 of the wiring system 38.

Figures 4 and 5 show the shape of the housing portion 46 able to receive the central trunk 40 of the wiring system 38. Similar housing portions can be provided in the zones of the structure of plastic material 14 along which are positioned the branches 42 of the wiring system 38.

With reference to Figures 4 and 5, the housing portions 46 are provided with elastically deformable retaining teeth 48 able to retain the bundle of wires 40 or 42 in the respective housing portion 46. The retaining teeth 48 (only one of which is visible in the figures) are integrally obtained during the moulding of the structure of plastic material 14. Preferably, the cable bundles 40, 42 are provided with tapings 50 in correspondence with the retaining teeth 48.

As shown in Figure 5, the housing portions 46 have at least one side open to allow the insertion of the respective wire bundle 40 or 42. The elastic teeth 48 are elastically deformed when the wire bundle 40, 42 is inserted into the respective housing portion 46. The teeth 48 apply an elastic force on the respective segments of wire bundles 40, 42. The elastic force of the various elastic teeth 48 allows the anchoring of the wiring system 38 to the structure of plastic material 14. As shown in Figure 5, each retaining tooth 48 can be provided with projections to enhance the grip on the cable bundle 40. The elastic teeth 48 can be dimensioned in such a way as to retain wire bundles with different dimensions.

The housing portions 46 and the retaining teeth 48 are formed integrally during the co-moulding of the structure of plastic material 14 on the metallic structure 12. The housing seats and the retention of the wiring system are formed without using additional components. The operations for fastening the wiring system 38 to the structure of plastic material 14 are more simple and rapid than prior art solutions, which require the use of separate housing and fastening elements.

## Claims

1. A vehicle dashboard, comprising:
- a support assembly (10) comprising a metallic support structure (12) including a cross beam (16) provided at its ends with fastening elements (18) for fastening the support assembly (10) to the body of a vehicle, and a structure made of plastic material (14), fixed on the metal support structure (12), and
- dashboard components and/or devices and a wiring system (38) attached to the support assembly (10),
**characterised in that** said structure made of plastic material (14) is co-moulded on said metallic support structure (12) and is provided with integral fastening portions (30, 32, 34, 36) for attaching said dashboard components and/or devices to the support assembly (10) and integral housing portions (46) which house and retain said wiring system (38).

2. A vehicle dashboard as claimed in claim 1, **characterised in that** the said housing portions (46) are provided with integral elastic teeth (48) for retaining wire bundles (40, 42).

3. A vehicle dashboard as claimed in claim 2, **characterised in that** retaining teeth (48) are able to apply an elastic pressure on the respective wire bundles (40, 42).

4. A vehicle dashboard as claimed in claim 3, **characterised in that** the integral housing portions (46) and said retaining teeth (48) are configured in such a way as to receive and retain wire bundles (40) having different dimensions.

## Patentansprüche

1. Fahrzeuginstrumententafel mit:
einer Stützbaugruppe (10), die einen metallischen Stützaufbau (12) mit einem Querbalken (16), der an seinen Enden mit Befestigungselementen (18) zum Befestigen der Stützbaugruppe (10) an dem Körper eines Fahrzeugs versehen ist, und einen aus einem Kunststoffmaterial hergestellten Aufbau (14) aufweist, der an dem Metallstützaufbau (12) fixiert ist, und
Instrumententafelkomponenten und/oder -Vorrichtungen und ein Leitungssystem (38), die an der Stützbaugruppe (10) befestigt sind, **dadurch gekennzeichnet, dass**
der aus Kunststoffmaterial hergestellte Aufbau (14) an dem metallischen Stützaufbau (12) mitausgeformt ist und mit integralen Befestigungsabschnitten (30, 32, 34, 36) zum Befestigen der Instrumententafelkomponenten und/oder -Vorrichtungen an der Stützbaugruppe (10) und integralen Gehäuseabschnitten (46) versehen ist, die das Leitungssystem (38) aufnehmen und halten.

2. Fahrzeuginstrumententafel nach Anspruch 1, **dadurch gekennzeichnet, dass** die Gehäuseabschnitte (46) mit einstückigen elastischen Zähnen (48) zum Halten von Drahtbündeln (40, 42) versehen sind.

3. Fahrzeuginstrumententafel nach Anspruch 2, **dadurch gekennzeichnet, dass** die haltenden Zähne (48) einen elastischen Druck auf die jeweiligen Drahtbündel (40, 42) aufbringen können.

4. Fahrzeuginstrumententafel nach Anspruch 3, **dadurch gekennzeichnet, dass** die integralen Gehäuseabschnitte (46) und die haltenden Zähne (48) in solch einer Weise gestaltet sind, um Drahtbündel (40) mit unterschiedlichen Abmessungen aufzunehmen und zu halten.

## Revendications

1. Tableau de bord de véhicule, comprenant :
un ensemble de support (10) comprenant une structure de support métallique (12) incluant une poutre transversale (16) pourvue à ses extrémités d'éléments de fixation (18) pour fixer l'ensemble de support (10) sur la carrosserie d'un véhicule, et une structure faite de matière plastique (14), fixée sur la structure de support métallique (12), et
des composants et/ou des dispositifs de tableau de bord et un système de câblage (38) fixés sur l'ensemble de support (10),
**caractérisé en ce que** ladite structure faite de matière plastique (14) est co-moulée sur ladite structure de support métallique (12) et est pourvue de parties de fixation d'un seul bloc (30, 32, 34, 36) pour fixer lesdits composants et/ou dispositifs de tableau de bord sur l'ensemble de support (10) et de parties de logement d'un seul bloc (46) qui logent et retiennent ledit système de câblage (38).

2. Tableau de bord de véhicule selon la revendication 1, **caractérisé en ce que** lesdites parties de logement (46) sont pourvues de dents élastiques (48) d'un seul bloc pour retenir des faisceaux de câblage (40, 42).

3. Tableau de bord de véhicule selon la revendication 2, **caractérisé en ce que** les dents de retenue (48) peuvent appliquer une pression élastique sur les faisceaux de câblage (40, 42) respectifs.

4. Tableau de bord de véhicule selon la revendication 3, **caractérisé en ce que** les parties de logement d'un seul bloc (46) et lesdites dents de retenue (48) sont configurées de façon à recevoir et retenir des faisceaux de câblage (40) ayant des dimensions différentes.
